# EUROPÄISCHE PATENTANMELDUNG

(11) **EP 2 457 686 A2**
(43) Veröffentlichungstag der Anmeldung: **30.05.2012**
(21) Anmeldenummer: 11184898.2
(22) Anmeldetag: 12.10.2011
(51) Int. Cl.: B23K 37/04

(54) **Vorrichtung zum Vorsehen eines definierten Schweißspalts, Verwendung einer derartigen Vorrichtung und Verfahren zum Verschweißen eines ersten Bauteils und eines zweiten Bauteils**

(30) Priorität: 24.11.2010 DE 202010015809 U
(71) Anmelder: Palige, Paul, 97618 Hohenroth (DE)
(72) Erfinder: Palige, Paul, 97618 Hohenroth (DE)
(74) Vertreter: Nowlan, Elke Ursula

(57) **Zusammenfassung**

Die Erfindung betrifft eine Vorrichtung (5) zum Vorsehen eines definierten Schweißspalts (4) zwischen einem ersten Bauteil (3) und einem zweiten Bauteil (1), welche miteinander zu verschweißen sind, wobei die Vorrichtung (5) an einem von den zu verschweißenden ersten und zweiten Bauteilen (3, 1) anklemmbar und daran selbständig fixierbar ist, um so den definierten Schweißspalt (4) zwischen dem ersten Bauteil (3) und dem zweiten Bauteil (1) vorzusehen. Die Erfindung betrifft weiterhin die Verwendung einer Schweißspaltklammer (2) und ein Verfahren zum Verschweißen eines ersten Bauteils (3) und eines zweiten Bauteils (1).

## Beschreibung

Die Erfindung betrifft eine Vorrichtung zum Vorsehen eines definierten Schweißspalts zwischen einem ersten Bauteil und einem zweiten Bauteil, welche miteinander zu verschweißen sind, die Verwendung einer derartigen Vorrichtung, sowie ein Verfahren zum Verschweißen eines ersten Bauteils und eines zweiten Bauteils.

Um ein erstes Bauteil mit einem zweiten Bauteil zu verschweißen ist es in der Schweißtechnik erforderlich, einen definierten Luft- bzw. Schweißspalt zwischen den beiden Bauteilen vorzusehen, damit die Wurzel der Naht durchgeschweißt werden kann.

Dieser benötigte Luft- bzw. Schweißspalt ist abhängig von der Blechdicke der zu verschweißenden Bauteile, dem Werkstoff der zu verschweißenden Bauteile, der Nahtvorbereitung und dem angewendetem Schweißverfahren.

Im Stand der Technik ist es bekannt, das Einstellen des benötigten Luft- bzw. Schweißspaltes vor dem Heften entweder über das exakte Positionieren der Schweißteile von Menschenhand, mit einer Spannvorrichtung oder durch kleine "Höcker" am Bauteil zu bewerkstelligen.

Für den Menschen ist es jedoch schwer, besonders schwere Teile von Hand ,,in der Luft" zu halten, bis sie geheftet sind.

Spannvorrichtungen sind dagegen sehr aufwendig, unflexibel und deshalb teuer.

Werden in der Nahtvorbereitung "Höcker" ausgespart, die als Abstandshalter dienen, kann man dadurch den Luftspalt gut einstellen. Allerdings ist an den Höckern keine vollständige Durchschweißung gewährleistet, ebenso ist die maschinelle Herstellung der Höckern z. B. durch Schleifen oder durch Brennschneiden technisch schwierig umzusetzen.

Daher ist es eine Aufgabe der vorliegenden Erfindung, eine Vorrichtung, eine Verwendung der Vorrichtung und ein Verfahren zu schaffen, mittels welcher ein definierter Schweißspalt beim Verschweißen zweier Bauteile auf einfache und kostengünstige Weise eingehalten werden kann.

Diese Aufgabe wird gemäß der Erfindung mittels einer Vorrichtung mit den Merkmalen gemäß Anspruch 1, der Verwendung der Vorrichtung mit den Merkmalen gemäß Anspruch 12 und mit einem Verfahren zum Verschweißen eines ersten Bauteils und eines zweiten Bauteils gemäß Anspruch 13 gelöst. Vorteilhafte Weiterbildungen der Erfindung sind in den jeweiligen Unteransprüchen definiert.

Erfindungsgemäß wird eine Vorrichtung zum Vorsehen eines definierten Schweißspalts zwischen einem ersten Bauteil und einem zweiten Bauteil bereitgestellt, welche miteinander zu verschweißen sind, wobei die Vorrichtung an einem von den zu verschweißenden ersten und zweiten Bauteilen anklemmbar und daran selbständig fixierbar ist, um so einen definierten Schweißspalt zwischen dem ersten Bauteil und dem zweiten Bauteil vorzusehen. Die Fixierung ist unabhängig von der Lage der Bauteile, da die Vorrichtung nicht herunterfallen kann. Weiterhin bietet die erfindungsgemäße Vorrichtung den Vorteil, dass beim Schweißen auf einfache und kostengünstige Weise ein definierter Schweißspalt zwischen dem ersten Bauteil und dem zweiten Bauteil gebildet und aufrechterhalten werden kann. Der Schweißer braucht lediglich die Vorrichtung auf das erste oder auf das zweite Bauteil zu klemmen und kann das Bauteil dann samt Vorrichtung an das andere Bauteil anlegen, mit welchem es zu verscheißen ist. Durch die Dicke der Vorrichtung wird der Schweißspalt vorgegeben, bis die zu verschweißenden Bauteile geheftet sind. Ein ,,in der Luft halten" des Bauteils ist nicht erforderlich.

Gemäß einer bevorzugten Ausführungsform ist die Vorrichtung als Schweißspaltklammer ausgebildet. Diese ist besonders einfach und kostengünstig herstellbar. Darüber hinaus kann durch die Schweißspaltklammer eine sichere Durchschweißung gewährleistet werden. Vorzugsweise kann die Schweißspaltklammer verschiedene Formen aufweisen, beispielsweise kann sie als "einfache" oder "doppelte" Schweißspaltklammer ausgebildet sein.

Gemäß noch einer bevorzugten Ausführungsform weist die Vorrichtung eine Materialstärke auf, welche in einem Bereich von 0,5 mm bis 4 mm liegt.

Gemäß noch einer weiteren bevorzugten Ausführungsform ist die Vorrichtung nach einem Arbeitsschritt des Heftens des ersten Bauteils und des zweiten Bauteils von dem ersten Bauteil oder dem zweiten Bauteil wieder entfernbar, insbesondere durch Abschmelzen oder durch mechanisches Entfernen.

Besonders vorteilhaft ist es, wenn die Vorrichtung nach dem Arbeitsschritt des Heftens des ersten Bauteils und des zweiten Bauteils überschweißbar ist. Vorzugsweise ist die Vorrichtung für unterschiedliche Bauteilformen verwendbar, insbesondere für Rohre und Bleche.

Gemäß noch einer weiteren bevorzugten Ausführungsform ist die Vorrichtung für unterschiedliche Blech- bzw. Wandstärken verwendbar, insbesondere für Blech- bzw. Wandstärken des ersten Bauteils und/oder des zweiten Bauteils, welche in einem Bereich von 3 bis 26 mm liegen. Beispielsweise ist eine Schweißspaltklammer mit einem Durchmesser von 2,0 mm für Wandstärken zwischen 6 und 10 mm geeignet und eine Schweißspaltklammer mit einem Durchmesser von 2,4 mm ist für Wandstärken von 11 bis 25 mm geeignet.

Darüber hinaus ist von Vorteil, wenn die Vorrichtung für unterschiedliche Nahtvorbereitungsarten verwendbar ist, insbesondere zur HV-, V-, X-Nahtvorbereitung.

Gemäß noch einer weiteren bevorzugten Ausführungsform ist die Vorrichtung an dem ersten Bauteil oder dem zweiten Bauteil derartig fixierbar, dass zumindest ein Abschnitt der Vorrichtung in der Schweißzone zwischen dem ersten Bauteil und dem zweiten Bauteil liegt, wobei der zumindest eine Abschnitt der Vorrichtung eine Materialstärke aufweist, welche dem zwischen dem ersten Bauteil und dem zweiten Bauteil zum Verschweißen zu definierenden Schweißspalt entspricht.

Ganz besonders bevorzugt ist es, wenn die Vorrichtung aus einem Schweißzusatzwerkstoff-Draht, insbesondere durch Biegen, hergestellt ist. Darüber hinaus ist es besonders vorteilhaft, wenn der Schweißzusatzwerkstoff-Draht aus einem Material hergestellt ist, der zum jeweiligen Schweißzusatzwerkstoff beim Schweißen des ersten Bauteils und des zweiten Bauteils passt. Dies bietet den Vorteil, dass beim Überschweißen der Schweißspaltklammer keine negativen Auswirkungen im Hinblick auf die metallurgischen und mechanischen Eigenschaften der Schweißnaht auftreten. Besonders bevorzugt ist der Draht aus NiMoCr für z.B. Baustähle und Feinkornbaustähle.

Vorzugsweise ist die Vorrichtung beim Vorwärmen durch einen Brenner zumindest teilweise abschmelzbar. Hierdurch ist ein mechanisches Entfernen der Schweißspaltklammer nicht notwendig.

Besonders bevorzugt ist es auch, wenn die Vorrichtung beim Überschweißen, insbesondere der durch das Vorwärmen bereits teilweise abgeschmolzenen Schweißspaltklammer, aufschmelzbar ist und mit in das Schmelzbad übergeht. Dies ist vorteilhaft, da hierdurch an der Stelle des Schweißspaltklammerstummels kein Fehler (beispielsweise ein nicht verschmolzener Bereich) in der Schweißnaht auftritt.

Erfindungsgemäß wird eine Verwendung zumindest einer Schweißspaltklammer, insbesondere einer Vorrichtung zum Einstellen und Aufrechterhalten eines definierten Schweißspalts zwischen einem ersten Bauteil und einem zweiten Bauteil, welche miteinander zu verschweißen sind, vorgesehen.

Erfindungsgemäß wird ebenfalls ein Verfahren zum Verschweißen eines ersten Bauteils und eines zweiten Bauteils bereitgestellt, welches die folgenden Schritte umfasst: Anordnen zumindest einer selbständig auf dem ersten Bauteil fixierbaren Vorrichtung auf dem ersten Bauteil; Positionieren des ersten Bauteils an dem zweiten Bauteil, wobei die auf dem ersten Bauteil angeordnete Vorrichtung einen Abstand zwischen dem ersten Bauteil und dem zweiten Bauteil entsprechend ihrer Materialstärke vorsieht; und schweißendes Heften des ersten Bauteils und des zweiten Bauteils.

Gemäß einem bevorzugten Ausführungsbeispiel umfasst das Verfahren nach dem Schritt des Heftens des ersten Bauteils und des zweiten Bauteils weiterhin den Schritt des Entfernens, insbesondere des Abschmelzens oder des mechanischen Entfernens, der Vorrichtung.

Gemäß noch einem weiteren bevorzugten Ausführungsbeispiel umfasst das Verfahren nach dem Schritt des Heftens des ersten Bauteils und des zweiten Bauteils weiterhin den Schritt des Überschweißens der Vorrichtung.

Die Erfindung umfasst auch eine Schweißspaltklammer, welche an einem Bauteil durch Aufschieben angeklemmt wird und sich danach selbstständig am zu verschweißendem Bauteil fixiert und so einen definierten Luftspalt zwischen zwei Bauteilen in der Schweißtechnik vorgibt.

Gemäß einer bevorzugten Ausführungsform wird bei dieser Schweißspaltklammer der sich ergebende Luftspalt durch die Materialstärke der Schweißspaltklammer vorgegeben, und je nach verwendetem kann die Materialstärke der Schweißspaltklammer zwischen 0,5 und 4 mm betragen.

Vorzugsweise kann die Schweißspaltklammer nach dem Heften der Bauteile wieder ganz oder teilweise entfernt werden, beispielsweise durch Abschmelzen und/oder mechanisches Entfernen.

Gemäß noch einer bevorzugten Ausführungsform kann die Schweißspaltklammer für unterschiedliche Bauteilformen verwendet werden, beispielsweise für Rohre und Bleche.

Vorzugsweise kann die Schweißspaltklammer für unterschiedliche Blech- bzw. Wandstärken verwendet werden, beispielsweise von 5 bis 10 mm, 11 bis 25 mm oder 26 bis 60 mm.

Darüber hinaus ist die Schweißspaltklammer vorzugsweise für unterschiedliche Nahtvorbereitungsarten verwendbar, beispielsweise zur HV-, V-, X-Nachtvorbereitung.

Im Nachfolgenden werden Ausführungsbeispiele der Erfindung unter Bezugnahme auf die beigefügte Zeichnung näher beschrieben. Es zeigt:
- Fig. 1: eine Vorrichtung gemäß einer Ausführungsform;
- Fig. 2: eine Schweißspaltklammer gemäß einer Ausführungsform;
- Fig. 3: eine Schweißspaltklammer gemäß einer weiteren Ausführungsform; und
- Fig. 4: eine Schweißspaltklammer gemäß noch einer weiteren Ausführungsform.

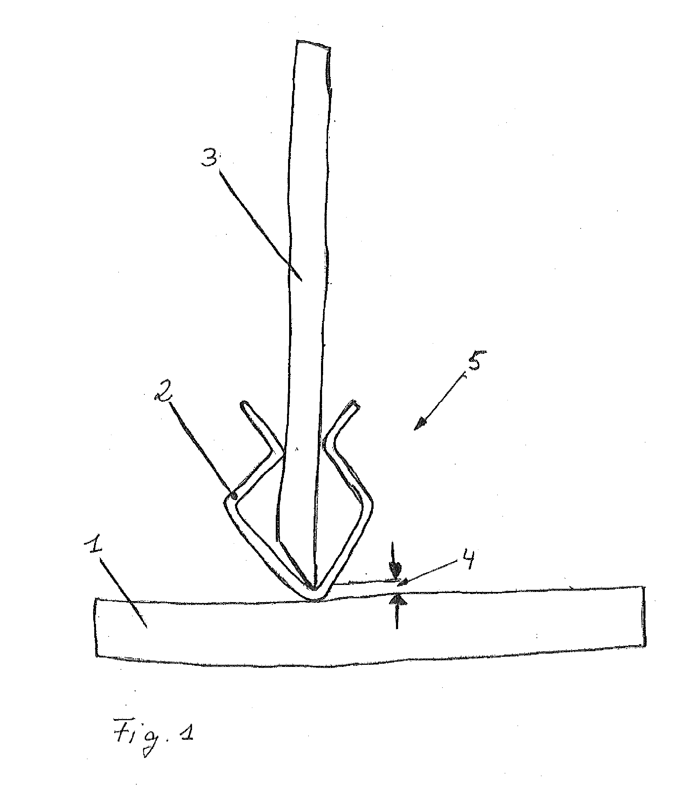

Fig. 1 zeigt eine Vorrichtung 5 gemäß einer Ausführungsform. Die Vorrichtung 5 ist als Schweißspaltklammer 2 ausgebildet. Weiterhin ist in der Figur ein erstes Bauteil 1 und ein zweites Bauteil 3 erkennbar, welche miteinander zu verschweißen sind. Auf dem zweiten Bauteil 3 ist die Schweißspaltklammer 2 angeordnet bzw. darauf festgeklemmt, so dass die Schweißspaltklammer 2 selbständig an dem zweiten Bauteil 3 während des heftenden Schweißens fixiert bleibt.

Ein Luft- bzw. Schweißspalt 4, der sich beim Aufeinanderlegen zwischen den zwei zu verschweißenden ersten und zweiten Bauteilen 1, 3 ergibt, wird nun durch die Materialstärke die Schweißspaltklammer 2 vorgegeben.

Zum exakten Positionieren eines Schweißteils werden im Normalfall mindestens zwei Schweißspaltklammern 2 an dem Schweißteil angebracht, damit das Teil nicht kippen kann. Zur Vermeidung von Verzug und einem damit verbundenen Verkleinern des Luft- bzw. Schweißspaltes 4 beim Verschweißen des ersten Bauteils 1 und des zweiten Bauteils 3 können auch mehrere Schweißspaltklammern 2 mit geringerem Abstand an einem der beiden ersten und zweiten Bauteile 1, 3 vorgesehen werden.

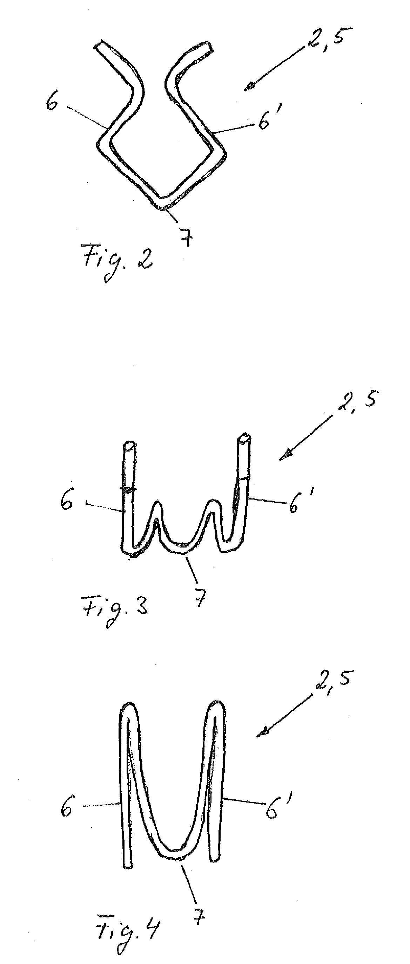

Fig. 2 zeigt eine Schweißspaltklammer 2 gemäß einer Ausführungsform. Die Schweißspaltklammer 2 wird im Gegensatz zu den in Fig. 3 und Fig. 4 dargestellten Ausführungsformen als "normale" oder "einfache" Schweißspaltklammer 2 bezeichnet. Sie weist einen ersten Beinabschnitt 6 und einen zweiten Beinabschnitt 6', welcher spiegelsymmetrisch zu dem ersten Beinabschnitt 6 ausgebildet und angeordnet ist, auf. Der erste Beinabschnitt 6 und der zweite Beinabschnitt 6' sind federelastisch ausgebildet, so dass zwischen dem ersten Beinabschnitt 6 und dem zweiten Beinabschnitt 6' das das zweite Bauteil 3 (siehe Fig. 1) klemmbar bzw. fixierbar ist. Weiterhin weist die Schweißspaltklammer 2 einen Abschnitt 7 auf, welcher als Distanzhalter zwischen dem ersten Bauteil 1 und dem zweiten Bauteil 3 fungiert und so den Schweißspalt 4 vorsieht. Beim Schweißen befindet sich der Abschnitt 7 in der Schweißzone. Der "Öffnungswinkel" der Schweißspaltklammer entspricht mindestens dem doppelten Winkel der Nahtvorbereitung des Bauteils, um ein Anliegen der Schweißspaltklammer an einer anderen als der gewünschten Stelle vorzubeugen. Beispielsweise ist ein Öffnungswinkel von 90° für die gängige 45° Nahtvorbereitung geeignet. Die Schweißspaltklammer ist aus einem Draht, der aus einem Schweißzusatzwerkstoff abgestimmt auf das jeweilige Bauteil besteht, hergestellt. Weiterhin entspricht die Dicke des Drahts bzw. die Materialstärke der Schweißspaltklammer 2 im Wesentlichen dem beim Schweißen benötigten Schweißspalt 4. Der für die hier dargestellte Schweißspaltklammer 2 verwendete Draht weist einen Durchmesser von 2,0 mm auf. Der Draht kann jedoch entsprechend dem beabsichtigten Einsatz auch jeglichen anderen Durchmesser, beispielsweise einen Durchmesser von 2,4 mm aufweisen.

Fig. 3 zeigt eine Schweißspaltklammer 2 gemäß einer weiteren Ausführungsform. Im Gegensatz zu der in Fig. 2 dargestellten Ausführungsform wird diese Ausführungsform als "doppelte" Schweißspaltklammer 2 bezeichnet. Während die in Fig. 2 dargestellte "einfache" Schweißspaltklammer 2 für normale Schweißteile verwendet wird, kann für besonders schwere Schweißteile die hier dargestellte "doppelte" Schweißspaltklammer 2 eingesetzt werden.

Auch die "doppelte" Schweißspaltklammer 2 weist einen ersten Beinabschnitt 6 und einen zweiten Beinabschnitt 6' auf. Zwischen dem ersten Beinabschnitt 6 und dem zweiten Beinabschnitt 6' ist der Abschnitt 7 angeordnet, welcher sich beim Schweißen in der Schweißzone befindet. Der Abschnitt 7 ist in der hier dargestellten Ausführungsform M-förmig ausgebildet. Auch die "doppelte" Schweißspaltklammer 2 ist federelastisch, so dass sie sich selbständig an einem zu verschweißenden Bauteil, welches zwischen dem ersten Beinabschnitt 6 und dem zweiten Beinabschnitt 6' geklemmt wird, fixiert.

Schließlich zeigt Fig. 4 eine Schweißspaltklammer 2 gemäß noch einer weiteren Ausführungsform. Die hier dargestellte Schweißspaltklammer 2 weist ebenfalls einen ersten Beinabschnitt 6 und einen zweiten Beinabschnitt 6' auf, zwischen welchen ein zu verschweißendes Bauteil klemmbar ist. Im Gegensatz zu der in Fig. 3 dargestellten Ausführungsform ist der Abschnitt 7, welcher sich beim Schweißen in der Schweißzone befindet, jedoch nicht M-förmig sondern U-förmig ausgebildet. Auch die hier dargestellte Schweißspaltklammer 2 ist federelastisch aus einem Draht hergestellt, der aus einem Schweißzusatzwerkstoff besteht.

Die in Fig. 2, Fig. 3 und Fig. 4 dargestellten Ausführungsformen sind sowohl für Bleche als auch für Rohre unterschiedlicher Wandstärken und Nahtvorbereitungen geeignet. Es sind jedoch auch andere Formen der Schweißspaltklammer 2 möglich. Ebenfalls ist es möglich, die Vorrichtung 5 in einer anderen Form vorzusehen, die nicht zwingend einer Klammer entspricht sondern auf eine andere Weise an dem zu verschweißenden Bauteil, z. B. mittels Presspassung oder dergleichen, fixierbar ist und mit einem Abschnitt als Distanzhalter wirkt. Darüber hinaus kann die Schweißspaltklammer 2 in verschiedenen Größen entsprechend den unterschiedlichen Blechstärken und aus verschiedenen Materialien entsprechend den Schweißteilen hergestellt sein.

Im Folgenden wird ein Verfahren zum Verschweißen eines ersten Bauteils 1 und eines zweiten Bauteils 3 mit Hilfe einer Schweißspaltklammer 2, wie sie in Fig. 2 oder Fig. 3 dargestellt ist, beschrieben. Als erstes wird die Schweißspaltklammer 2 bzw. eine Vielzahl von Schweißspaltklammern 2 auf einem der beiden Bauteile 1, 3 angeordnet. Sind die Schweißteile mit den Schweißspaltklammern 2 dann positioniert worden, wie es z. B. in Fig. 1 dargestellt ist, werden viele Schweißteile aus hochwertigem Stahl vor dem Verschweißen mit einem Brenner zwischen den Schweißspaltklammern 2 vorgewärmt und anschließend zwischen den Schweißspaltklammern 2 geheftet.

Sind die Schweißteile geheftet, werden die Schweißspaltklammern 2 zur Positionierung nicht mehr benötigt und können mit einem Brenner beim Vorwärmen des restlichen Bauteils ab- bzw. angeschmolzen werden. Eine abgeschmolzene Schweißspaltklammer 2 kann überschweißt werden.

Zur Vermeidung eines eventuell auftretenden kleinen Schweißfehlers an der Stelle der Schweißspaltklammer 2 beim Überschweißen kann man die Schweißspaltklammern auch vollständig entfernen, z. B. durch Schleifen, einem spitzem Gegenstand, einer Zange oder einer Drahtbürste.

Die Heftnähte an den Schweißteilen werden in der Regel sowieso angeschliffen, das Wegschleifen der Schweißspaltklammer 2 bzw. des Restes der Schweißspaltklammer 2 nach dem Abschmelzen kann in diesem Arbeitsgang mit durchgeführt werden.

Werden die Schweißspaltklammern 2 bzw. die abgeschmolzenen Reste vor dem Verschweißen nicht entfernt, so schmelzen sie beim Verschweißen vollständig oder teilweise auf. Der dadurch eventuell entstehende Fehler ist geringer als der Fehler, der bei einer nicht angeschliffenen Heftnaht entstehen kann.
Es können auch mehrere erfindungsgemäße Vorrichtungen nebeneinander gesetzt werden, um längere Schweißnähte zu realisieren.

## Patentansprüche

1. Vorrichtung (5) zum Vorsehen eines definierten Schweißspalts (4) zwischen einem ersten Bauteil (3) und einem zweiten Bauteil (1), welche miteinander zu verschweißen sind, wobei die Vorrichtung (5) an einem von den zu verschweißenden ersten und zweiten Bauteilen (3, 1) anklemmbar und daran selbständig fixierbar ist, um so den definierten Schweißspalt (4) zwischen dem ersten Bauteil (3) und dem zweiten Bauteil (1) vorzusehen.

2. Vorrichtung (5) gemäß Anspruch 1, wobei die Vorrichtung (5) als Schweißspaltklammer (2) ausgebildet ist.

3. Vorrichtung (5) gemäß Anspruch 1 oder 2, welche eine Materialstärke aufweist, welche in einem Bereich von 0,5 mm bis 4 mm liegt.

4. Vorrichtung (5) gemäß irgendeinem der vorherigen Ansprüche, wobei die Vorrichtung (5) nach einem Arbeitsschritt des Heftens des ersten Bauteils (3) und des zweiten Bauteils (1) von dem ersten Bauteil (3) oder dem zweiten Bauteil (1) wieder entfernbar ist, insbesondere durch Abschmelzen oder durch mechanisches Entfernen.

5. Vorrichtung (5) gemäß irgendeinem der Ansprüche 1 bis 3, wobei die Vorrichtung (5) nach dem Arbeitsschritt des Heftens des ersten Bauteils (3) und des zweiten Bauteils (1) überschweißbar ist.

6. Vorrichtung (5) gemäß irgendeinem der vorhergehenden Ansprüche, wobei die Vorrichtung (5) für unterschiedliche Bauteilformen, insbesondere für Rohre und Bleche, und für unterschiedliche Nahtvorbereitungsarten verwendbar ist, insbesondere zur HV-, V-, X-Nahtvorbereitung.

7. Vorrichtung (5) gemäß irgendeinem der vorhergehenden Ansprüche, wobei die Vorrichtung (5) für unterschiedliche Blech- bzw. Wandstärken verwendbar ist, insbesondere für Blech- bzw. Wandstärken des ersten Bauteils (3) und/oder des zweiten Bauteils (1), welche in einem Bereich von 3 bis 60 mm liegen.

8. Vorrichtung (5) gemäß irgendeinem der vorherigen Ansprüche, wobei die Vorrichtung (5) an dem ersten Bauteil (3) oder dem zweiten Bauteil (1) derartig fixierbar ist, dass zumindest ein Abschnitt (7) der Vorrichtung (5) in der Schweißzone zwischen dem ersten Bauteil (3) und dem zweiten Bauteil (1) liegt, wobei der zumindest eine Abschnitt (7) der Vorrichtung (5) eine Materialstärke aufweist, welche dem zwischen dem ersten Bauteil (3) und dem zweiten Bauteil (1) zum Verschweißen zu definierenden Schweißspalt (4) entspricht.

9. Vorrichtung (5) gemäß irgendeinem der vorherigen Ansprüche, wobei die Vorrichtung (5) aus einem Schweißzusatzwerkstoff-Draht, insbesondere aus einem UP- oder MIG/MAG Zusatzwerkstoff, insbesondere NiMoCr, hergestellt ist.

10. Vorrichtung (5) gemäß irgendeinem der vorherigen Ansprüche, wobei die Vorrichtung (5) beim Vorwärmen durch einen Brenner zumindest teilweise abschmelzbar ist.

11. Vorrichtung (5) gemäß irgendeinem der vorherigen Ansprüche, wobei die Vorrichtung (5) beim Überschweißen aufschmelzbar ist.

12. Verwendung zumindest einer Schweißspaltklammer (2), insbesondere einer Vorrichtung (5) gemäß den Ansprüchen 1 bis 11, zum Einstellen und Aufrechterhalten eines definierten Schweißspalts (4) zwischen einem ersten Bauteil (3) und einem zweiten Bauteil (1), welche miteinander zu verschweißen sind.

13. Verfahren zum Verschweißen eines ersten Bauteils (3) und eines zweiten Bauteils (1), welches die folgenden Schritte umfasst:
- Anordnen zumindest einer selbständig auf dem ersten Bauteil (3) fixierbaren Vorrichtung auf dem ersten Bauteil (3) an derjenigen Stelle, an welcher das erste Bauteil (3) durch Verschweißen mit dem zweiten Bauteil (1) verbunden werden soll;
- Positionieren des ersten Bauteils (3) an dem zweiten Bauteil (1), wobei die auf dem ersten Bauteil (3) angeordnete Vorrichtung (5) in Berührung mit dem ersten Bauteil kommt, derart, dass ein Schweißspalt (4) zwischen dem ersten Bauteil (3) und dem zweiten Bauteil (1) entsprechend der Materialstärke der Vorrichtung (5) bewirkt wird;
- Schweißendes Heften des ersten Bauteils (3) und des zweiten Bauteils (1).

14. Verfahren gemäß Anspruch 13, welches nach dem Schritt des Heftens des ersten Bauteils (3) und des zweiten Bauteils (1) weiterhin den Schritt umfasst des Entfernens, insbesondere durch Abschmelzen oder durch mechanisches Entfernen, der Vorrichtung (5).

15. Verfahren gemäß Anspruch 13, welches nach dem Schritt des Heftens des ersten Bauteils (3) und des zweiten Bauteils (1) weiterhin den Schritt umfasst des Überschweißens der Vorrichtung (5).
